# EUROPEAN PATENT APPLICATION

(11) **EP 3 795 601 A1**
(43) Date of publication of application: **24.03.2021**
(21) Application number: 19197828.7
(22) Date of filing: 17.09.2019
(51) Int. Cl.: C08G 18/08, C08G 18/34, C08G 18/42, C08G 18/72, C09J 175/06, C08G 18/12

(54) **AQUEOUS POLYURETHANE DISPERSION**

(71) Applicant: Covestro Deutschland AG, 51373 Leverkusen (DE)
(72) Inventor: The designation of the inventor has not yet been filed
(74) Representative: Levpat

(57) **Abstract**

The present invention relates to an aqueous polyurethane dispersion and a process for preparing the same, an adhesive containing the same, and an adhesion article obtained by bonding with the adhesive. The aqueous polyurethane dispersion comprises a polyurethane having an anionic group dispersed therein, the polyurethane has a fusion enthalpy of 3J/g - 100J/g at 20°C-100°C of the first temperature rising curve measured with the DSC according to DIN 65467, a weight-average molecular weight of 31,000 - 95,000, and the aqueous polyurethane dispersion has an acid value of 0.5 mg KOH/g - 8.5 mg KOH/g. The adhesive comprising the aqueous polyurethane dispersion of the present invention has an excellent initial bonding force.

## Description

### Technical Field

The present invention relates to an aqueous polyurethane dispersion and a process for preparing the same, an adhesive containing the same, and an adhesion article obtained by bonding with the adhesive.

### Background Technology

Aqueous polyurethane dispersions can be widely used in coatings, adhesives, sealants and printing inks.

US2015/0037555A1 discloses a self-sustaining adhesive film comprising a solid surface passivated isocyanate and greater than 70 wt% of a first polyurethane having a weight average molecular weight of no greater than about 90,000 and a fusion enthalpy of at least about 25 J/g. The first polyurethane is obtained by reacting a mixture comprising a polyester polyol and an aliphatic isocyanate.

US2013/0236719A1 discloses a thermoforming method, preferably a method of covering a substrate substance with a multilayer decorative film in a vacuum forming process, characterized in that the method comprises the following steps: (i) providing a multilayer decorative film, comprising a hard coating layer (A), a bonding layer (D), a substrate film layer, and an optional design layer between these layers (A) and (D), wherein the bonding layer (D) comprises at least one a potential reactive adhesive, (ii) applying the bonding layer (D) of the decorative film to the surface of the substrate substance, (iii) covering the substrate substance with the decorative film by heating at 70°C or higher. Wherein the adhesive comprises an aqueous dispersion obtained by reacting a mixture comprising a polyisocyanate and an isocyanate-reactive compound and dispersing the mixture in water. The isocyanate-reactive compound is crystalline or semi-crystalline and has a weight average molecular weight of 20,000 to 250,000.

US2016/0168434A1 discloses an aqueous adhesive composition comprising: a surface passivated solid isocyanate, a first polyurethane dispersion and a second polyurethane dispersion. The first polyurethane dispersion contains a functional group reactive to isocyanate, which may be obtained by reacting a mixture containing a crystalline polymer polyol and an aliphatic polyisocyanate. The first polyurethane has a weight-average molecular weight of not less than about 50,000 and not more than about 125,000.

US2015/0034314A1 discloses a coated particle coated with a coating comprising a crystalline or semi-crystalline polyurethane having a weight average molecular weight of 20,000-250,000. The polyurethane is obtained by reacting a mixture containing a di-or poly-isocyanate, a polyester polyol and a compound containing a sulfonate group and/or a carboxylate group, wherein the di-or poly-isocyanate is an aliphatic and/or alicyclic diisocyanate.

US2012/0225302A1 discloses an aqueous composition comprising (a) at least one crystalline or semi-crystalline polyurethane having a weight average molecular weight of 20,000-250,000, (b) at least one polyisocyanate having an aliphatically bonded isocyanate group and which is a liquid at a temperature of 20-25°C, (c) at least one or more compounds having an element of Groups V and VIB of the Periodic Table, wherein said element has an oxidation degree of at least +4, (d) optional other auxiliary substances and additives.

EP1512705A1 discloses an aqueous polyurethane dispersion containing a pendant carboxyl group, the polyurethane contained therein is obtained by reacting a mixture containing a polyester polyol and an isophorone diisocyanate, and the polyurethane has a weight average molecular weight of 1,000-100,000.

US2013/0220543A1 discloses a method for producing a coated article comprising the steps of: (I) providing a substrate; (II) applying a first polyurethane and/or polyurethane-polyurea polymer to the substrate, the first polyurethane and/or polyurethane-polyurea polymer is capable of attaining an at least partially crystalline state with a final degree of crystallinity and wherein during and/or after the application the first polyurethane and/or polyurethane-polyurea polymer is present in an amorphous state. The method further comprises the steps: (III) applying onto the first polyurethane and/or polyurethane-polyurea polymer of step (II) a composition comprising a mixture of a second polyurethane and/or polyurethane-polyurea polymer and furthermore an acrylate polymer, wherein the application is performed while the degree of crystallinity of the first polyurethane-polyurea polymer is lower than its final degree of crystallinity; and (IV) cooling the article obtained to a temperature below the glass transition temperature of the acrylate polymer. The second polyurethane and/or polyurethane-polyurea polymer has a weight-average molecular weight of 15,000-150,000.

DE102015213353A1 discloses an aqueous polyurethane dispersion in which the polyurethane is obtained by reacting a mixture comprising a semi-crystalline polyester polyol, an aliphatic diisocyanate and a sulfonated glycol. The polyurethane has a weight-average molecular weight of 15,000-25,000.

The above aqueous polyurethane dispersion cannot be applied to an adhesive which requires an initial bonding force. Therefore, it is desired in the industry, especially in the shoe-glue industry to develop a new aqueous polyurethane dispersion that can achieve an excellent initial bonding force upon being used in the field of adhesives.

### Summary of the Invention

It is an object of the present invention to provide an aqueous polyurethane dispersion and a process for preparing the same, an adhesive containing the same, and an adhesion article obtained by bonding with the adhesive.

The aqueous polyurethane dispersion according to the invention comprises a polyurethane having an anionic group dispersed therein, the polyurethane has a fusion enthalpy of 3J/g-100J/g at 20°C-100°C of the first temperature rising curve measured with the DSC according to DIN 65467, a weight-average molecular weight of 31,000-95,000, and the aqueous polyurethane dispersion has an acid value of 0.5 mg KOH/g-8.5 mg KOH/g.

According to one aspect of the invention, there is provided a process for preparing an aqueous polyurethane dispersion provided in accordance with the present invention, comprising the steps of:
i. reacting some or all of a polyisocyanate mixture and an isocyanate-reactive group-containing mixture to obtain a prepolymer, the reaction is carried out in the presence of an optional solvent, or an optional solvent is added after the reaction to dissolve the prepolymer;
ii. reacting the prepolymer, an emulsifier, an optional reactive diluent, an optional stabilizer, the polyisocyanate mixture that is not added in the step i, and the isocyanate-reactive group-containing mixture that is not added in the step i to obtain the polyurethane; and
iii. introducing water and an optional emulsifier before, during or after step ii to obtain the aqueous polyurethane dispersion;

The aqueous polyurethane dispersion comprises a polyurethane having an anionic group dispersed therein, said polyurethane has a fusion enthalpy of 3J/g-100J/g at 20°C-100°C of the first temperature rising curve measured with the DSC according to DIN 65467, and a weight-average molecular weight of 31,000-95,000, the aqueous polyurethane dispersion has an acid value of 0.5 mg KOH/g-8.5 mg KOH/g.

According to yet another aspect of the present invention, there is provided a composition comprising an aqueous polyurethane dispersion provided in accordance with the present invention.

According to another aspect of the invention, there is provided an adhesive comprising an aqueous polyurethane dispersion provided in accordance with the present invention.

According to still another aspect of the present invention, there is provided an adhesion article comprising a substrate bonded with an adhesive provided in accordance with the present invention.

According to still another aspect of the present invention, there is provided a method of manufacturing an adhesion article, comprising the steps of:
A. applying an adhesive provided in accordance with the present invention to at least one surface of a substrate;
B. heating and drying the surface of the substrate to which the adhesive is applied; and
C. contacting the surface of the substrate treated in step B with the substrate itself or the surface of an additional substrate to obtain the adhesion article.

According to still another aspect of the present invention, there is provided the use of an aqueous polyurethane dispersion provided in accordance with the present invention in the production of an adhesion article.

The aqueous polyurethane dispersion of the present invention has a certain acid value, and the polyurethane contained therein has a certain fusion enthalpy and a certain weight-average molecular weight. The adhesive comprising the aqueous polyurethane dispersion of the present invention has an excellent initial bonding force.

### Detailed Description of the Invention

The present invention provides an aqueous polyurethane dispersion comprising a polyurethane having an anionic group dispersed therein, the polyurethane has a fusion enthalpy of 3J/g-100J/g at 20°C-100°C of the first temperature rising curve measured with the DSC according to DIN 65467, a weight-average molecular weight of 31,000-95,000, and the aqueous polyurethane dispersion has an acid value of 0.5 mg KOH/g-8.5 mg KOH/g. The present invention also provides a process for preparing the aqueous polyurethane dispersion, an adhesive comprising the aqueous polyurethane dispersion, and an adhesion article obtained by bonding with the adhesive.

The aqueous polyurethane dispersion of the present invention comprises an aqueous polyurethane urea dispersion, an aqueous polyurethane-polyurea dispersion and/or an aqueous polyurea dispersion.

The sulfonate group of the present invention means -SO₃⁻.

The carboxylate group of the present invention means-COO⁻.

The carboxyl group of the present invention means -COOH.

### Aqueous polyurethane dispersion

The polyurethane has a fusion enthalpy of preferably 25J/g-100J/g, most preferably 30 J/g-80 J/g at 20°C-100°C of the first temperature rising curve measured with the DSC according to DIN 65467.

The polyurethane contains a carboxyl group, the carboxyl group content of the polyurethane is preferably 0.1 wt%-1.5 wt%, on a basis that the amount of the polyurethane is 100 wt%.

The anionic group is preferably located on the side chain of the polyurethane.

The anionic group is preferably one or more of the following: a sulfonate group and a carboxylate group.

The number-average molecular weight of the polyurethane is preferably 1,000 g/mol-10,000 g/mol.

The aqueous polyurethane dispersion comprises water.

The solid content of the aqueous polyurethane dispersion is preferably 20-70 wt%, further preferably 30-65 wt%, most preferably 35-60 wt%, on a basis that the amount of the aqueous polyurethane dispersion is 100 wt%.

The polyurethane is preferably obtained by reacting a system comprising the following components:
a. a polyisocyanate mixture containing hexamethylene diisocyanate;
b. an isocyanate-reactive group-containing mixture, comprising a polymer polyol having a number-average molecular weight of 400 g/mol - 8,000 g/mol and a carboxyl group-containing isocyanate-reactive compound;
c. an emulsifier;
d. an optional solvent;
e. an optional reactive diluent; and
f. an optional stabilizer;
the polymer polyol has a fusion enthalpy of 3J/g-100J/g at 20°C-100°C of the first temperature rising curve measured with the DSC according to DIN 65467, the amount of the carboxyl group-containing isocyanate-reactive compound is 0.1wt%-1.5wt% on a basis that the amount of the polyurethane is 100wt%, and the neutralization degree of the carboxyl groups of the carboxyl group-containing isocyanate-reactive compound is 0-50%.

### Polyisocyanate mixture

The polyisocyanate mixture preferably has an isocyanate functionality of 2-4, most preferably 2.

The amount of the polyisocyanate mixture is preferably 5wt%-70wt%, further preferably 5wt%-40wt%, still further preferably 5wt%-35wt%, most preferably 10wt%-30wt%, on a basis that the amount of the system is 100wt%.

The amount of the hexamethylene diisocyanate is preferably 0.01wt%-100wt%, on a basis that the amount of the polyisocyanate mixture is 100wt%.

The polyisocyanate mixture may further comprise an isocyanate different from the hexamethylene diisocyanate.

The isocyanate different from the hexamethylene diisocyanate is preferably one or more of the following: an aliphatic isocyanate, an alicyclic isocyanate, an aromatic isocyanate, and a derivative thereof having an iminooxadiazinedione group, an isocyanurate group, an uretdione group, a carbamate group, an allophanate group, a biuret group, an urea group, an oxadiazinetrione group, an oxazolidinone group, an acyl urea group and/or a carbodiimide group.

The aliphatic isocyanate is preferably one or more of the following: 2,2-dimethyl-pentamethylene diisocyanate, 2,2,4-trimethyl-hexamethylene diisocyanate, butylene diisocyanate, 1,3-butadiene-1,4-diisocyanate, 2,4,4-trimethyl-1,6-hexamethylene diisocyanate, 1,6,11-undecane triisocyanate, 1,3,6-hexamethylene triisocyanate, 1,8-diisocyanato-4-isocyanatomethyl octane, bis(isocyanatoethyl)carbonate, bis(isocyanatoethyl)ether, lysine methyl ester diisocyanate, lysine triisocyanate, bis(isocyanatomethyl) sulfide, bis(isocyanatoethyl) sulfide, bis(isocyanatopropyl) sulfide, bis(isocyanatohexyl) sulfide, bis(isocyanatomethyl) sulfone, bis(isocyanatomethyl) disulfide, bis(isocyanatoethyl) disulfide, bis(isocyanatopropyl) disulfide, bis(isocyanatomethylthio) methane, bis(isocyanatoethylthio) methane, bis(isocyanatomethylthio) ethane, bis(isocyanatoethylthio) ethane, 1,5-diisocyanato-2-isocyanatomethyl-3-thia-pentane, 1,2,3-tri(isocyanatomethylthio) propane, 1,2,3-tri(isocyanatoethylthio) propane, 3,5-dithia-1,2,6,7-heptane tetraisocyanate, 2,6-diisocyanatomethyl-3,5-dithia-1,7-heptane diisocyanate, 2,5-diisocyanate methylthiophene, isocyanatoethylthio-2,6-dithia-1,8-octane diisocyanate, thio-bis(3-isothiocyanato propane), thio-bis(2-isothiocyanato ethane), ditho-bis(2-isothiocyanato ethane) and isophorone diisocyanate.

The alicyclic isocyanate is preferably one or more of the following: 2,5-bis(isocyanatomethyl)-bicyclo-[2.2.1]heptane, 2,6-bis(isocyanatomethyl)-bicyclo-[2.2.1]heptane, bis(isocyanatomethyl) cyclohexane, isophorone diisocyanate, 2,5-diisocyanato tetrahydrothiophene, 2,5-diisocyanatomethyl tetrahydrothiophene, 3,4-diisocyanatomethyl tetrahydrothiophene, 2,5-diisocyanato-1,4-dithiane, 2,5-diisocyanatomethyl-1,4-dithiane, 4,5-diisocyanato-1,3-dithiolane, 4,5-bis(isocyanatomethyl)-1,3-dithiolane, 4,5-diisocyanatomethyl-2-methyl-1,3-dithiolane, norbornane diisocyanate (NBDI), xylylene diisocyanate (XDI), hydrogenated xylylene diisocyanate (H₆XDI), 1,4-cyclohexyl diisocyanate (H₆PPDI), 1,5-pentamethylene diisocyanate (PDI), m-tetramethylxylene diisocyanate (m-TMXDI) and cyclohexane diisothiocyanate.

The aromatic isocyanate is preferably one or more of the following: 1,2-diisocyanato benzene, 1,3-diisocyanato benzene, 1,4-diisocyanato benzene, 2,4-diisocyanato toluene, ethyl benzene diisocyanate, isopropyl benzene diisocyanate, toluene diisocyanate, diethylbenzene diisocyanate, diisopropyl benzene diisocyanate, trimethylbenzene triisocyanate, benzene triisocyanate, biphenyl diisocyanate, toluidine diisocyanate, 4,4'-methylene bis(phenyl isocyanate), 4,4'-methylene bis(2-methylphenyl isocyanate), bibenzyl-4,4'-diisocyanate, bis(isocyanatophenyl) ethylene, bis(isocyanatomethyl) benzene, bis(isocyanatoethyl) benzene, bis(isocyanatopropyl) benzene, α,α,α',α'-tetramethyl-benzene dimethylene diisocyanate, bis(isocyanatobutyl) benzene, bis(isocyanatomethyl) naphthalene, bis(isocyanatomethylphenyl) ether, bis(isocyanatoethyl) phthalate, 2,6-di(isocyanatomethyl) furan, 2-isocyanatophenyl-4-isocyanatophenyl thioether, bis(4-isocyanatophenyl) thioether, bis(4-isocyanatomethyl phenyl) thioether, bis(4-isocyanatophenyl) disulfide, bis(2-methyl-5-isocyanatophenyl) disulfide, bis(3-methyl-5-isocyanatophenyl) disulfide, bis(3-methyl-6-isocyanatophenyl) disulfide, bis(4-methyl-5-isocyanatophenyl) disulfide, bis(4-methoxy-3-isocyanatophenyl) disulfide, 1,2-diisothiocyanato benzene, 1,3-diisothiocyanato benzene, 1,4-diisothiocyanato benzene, 2,4-diisothiocyanato toluene, 2,5-diisothiocyanato-metaxylene, 4,4'-methylene bis(phenyl isothiocyanate), 4,4'-methylene bis(2-methylphenyl isothiocyanate), 4,4'-methylene bis(3-methylphenyl isothiocyanate), 4,4'-diisothiocyanato diphenyl ketone, 4,4'-diisothiocyanato-3,3'-dimethyl diphenyl ketone, bis(4-isothiocyanatophenyl) ether, 1-isothiocyanato-4-[(2-isothiocyanato)sulfonyl]benzene, thio-bis(4-isothiocyanato benzene), sulfonyl (4-isothiocyanato benzene), hydrogenated toluene diisocyanate (H₆TDI), diphenylmethane diisocyanate and ditho-bis(4-isothiocyanato benzene).

The isocyanate different from the hexamethylene diisocyanate can also have an isocyanato group and an isothiocyanato group, for example, 1-isocyanato-6-isothiocyanato hexane, 1-isocyanato-4-isothiocyanato cyclohexane, 1-isocyanato-4-isothiocyanato benzene, 4-methyl-3-isocyanato-1-isothiocyanato benzene, 2-isocyanato-4,6-diisothiocyanato-1,3,5-triazine, 4-isocyanatophenyl-4-isothiocyanatophenyl thioether and 2-isocyanatoethyl-2-isothiocyanatoethyl disulfide.

The isocyanate different from the hexamethylene diisocyanate may also be a halogen substituent of the above isocyanate, for example, a chlorine substitute, a bromine substitute, an alkyl substitute, an alkoxy substitute, a nitro substitute or a silane substitute such as isocyanatopropyltriethoxysilane or isocyanatopropyltrimethoxysilane.

### Isocyanate-reactive group-containing mixture

"Isocyanate reactive group" in the present invention refers to a group containing Zerevitinov-active hydrogen, the definition of Zerevitinov-active hydrogen is made with reference to Rompp's Chemical Dictionary (Rommp Chemie Lexikon), 10th ed., Georg Thieme Verlag Stuttgart, 1996. In general, a group containing a Zerevitinov-active hydrogen is understood in the art to mean a hydroxyl group (OH), an amino group (NHx), and a thiol group (SH).

The amount of the isocyanate-reactive group-containing mixture is preferably 5 wt% - 90 wt%, more preferably 10 wt% - 90 wt%, on a basis that the amount of the system is 100 wt%.

The functionality of the isocyanate-reactive group of the isocyanate-reactive group-containing mixture is preferably 1-3, most preferably 1-2.

The fusion enthalpy of the polymer polyol at 20°C-100°C of the first temperature rising curve measured with the DSC according to DIN 65467 is preferably 25 J/g-100 J/g, most preferably 30 J/g-80 J/g.

The hydroxyl functionality of the polymer polyol is 1.8-2.4.

The number-average molecular weight of the polymer polyol is preferably 400 g/mol-5000 g/mol, most preferably 900 g/mol-3500 g/mol, and the number-average molecular weight is determined at 40°C by gel permeation chromatography using tetrahydrofuran as the mobile phase and polystyrene as the control standard.

The amount of the polymer polyol is 50 wt% - 99.9 wt%, on a basis that the amount of the isocyanate-reactive group-containing mixture is 100wt%.

The polymer polyol preferably is a polyester polyol.

The polyester polyol is preferably one or more of the following: a linear polyester polyol, a lightly branched polyester polyol, and a homopolymer or a mixed polymer of a lactone.

The linear polyester polyol or the lightly branched polyester polyol is prepared by including the following components: aliphatic, alicyclic or aromatic di- or poly- carboxylic acids, for example succinic acid, methyl succinic acid, glutaric acid, adipic acid, pimelic acid, suberic acid, azelaic acid, sebacic acid, nonane dicarboxylic acid, decane dicarboxylic acid, terephthalic acid, isophthalic acid, phthalic acid, tetrahydrophthalic acid, hexahydrophthalic acid, cyclohexane dicarboxylic acid, maleic acid, fumaric acid, malonic acid or trimellitic acid; acid anhydride, for example phthalic anhydride, trimellitic anhydride or succinic anhydride or a mixture thereof; and low molecular weight polyol, and optinally higher functionality polyol, for example, trimethylolpropane, glycerol or pentaerythritol, alicyclic and/or aromatic di- and poly-hydroxyl compounds.

The homopolymer or the mixed polymer of a lactone is preferably obtained by adding the lactone or the lactone mixture such as butyrolactone, ε-caprolactone and/or methyl-ε-caprolactone to an appropriate di- and/or higher functional initiator molecule. The ε-caprolactone preferably is a polymer of ε-caprolactone.

The polyester polyol preferably is 1,4-butanediol polyadipate diol.

The neutralization degree of the carboxyl group of the carboxyl group-containing isocyanate-reactive compound is preferably 0.

The carboxyl group can be neutralized with an organic substance or an inorganic substance.

The carboxyl group-containing isocyanate-reactive compound is preferably one or more of the following: 2,2-dihydroxymethyl propionic acid, 2,2-dihydroxymethyl butyric acid and amino acid. The amino acid is preferably one or more of the following: lysine, 6-aminocaproic acid and proline.

The isocyanate-reactive group-containing mixture preferably further comprises a compound different from the polymer polyol or different from the carboxyl group-containing isocyanate-reactive compound, and preferably one or more of the following: a hydroxyl group-containing compound, a thiol group-containing compound and an amino group-containing compound.

The hydroxyl group-containing compound is preferably one or more of the following: polyacrylate polyol, polyurethane polyol, polycarbonate polyol, polyether glycol, polyester polyacrylate polyol, polyurethane polyacrylate polyol, polyurethane polyester polyol, polyurethane polyether glycol, polycarbonate polyether glycol, polyurethane polycarbonate polyol, polyester polycarbonate polyol and hydroxy functional compound having a molecular weight of 32g/mol-400g/mol.

The hydroxy functional compound having a molecular weight of 32g/mol-400g/mol is preferably one or more of the following: a polyol having up to 20 carbon atoms, an ester diol and a mono-functional or isocyanate-reactive hydroxy functional compound.

The polyol having up to 20 carbon atoms is preferably one or more of the following: ethylene glycol, diethylene glycol, triethylene glycol, 1,2-propylene glycol, 1,3-propylene glycol, 1,4-butanediol, 1,3-butanediol, cyclohexanediol, 1,4-cyclohexane dimethanol, 1,6-hexandiol, neopentyl glycol, hydroquinone dihydroxy ethyl ether, bisphenol A (2,2-bis(4-hydroxyphenyl)propane), hydrogenated bisphenol A (2,2-bis(4-hydroxycyclohexyl)propane), trimethylolpropane, glycerol and pentaerythritol.

The ester diol is preferably one or more of the following: α-hydroxybutyl-ε-hydroxy hexanoate, ω-hydroxyhexyl-γ-hydroxy butyrate, β-hydroxyethyl adipate and β-hydroxyethyl terephthalate.

The mono-functional or isocyanate-reactive hydroxy functional containing compound is preferably one or more of the following: ethanol, n-butanol, ethylene glycol monobutyl ether, diethylene glycol monomethyl ether, ethylene glycol monobutyl ether, diethylene glycol monobutyl ether, propylene glycol monomethyl ether, dipropylene glycol monomethyl ether, tripropylene glycol monomethyl ether, dipropylene glycol monopropyl ether, propylene glycol monobutyl ether, dipropylene glycol monobutyl ether, tripropylene glycol monobutyl ether, 2-ethylhexanol, 1-octanol, 1-dodecanol, 1-hexadecanol, 1,6-hexandiol, 1,4-butanediol, neopentyl glycol and trimethylolpropane, most preferably one or more of the following: 1,6-hexandiol, 1,4-butanediol, neopentyl glycol and trimethylolpropane.

The thiol group-containing compound is preferably one or more of the following: a compound containing at least one thiol group, a polythiol containing a thioether group, a polyester thiol, and an aromatic thio compound.

The amino group-containing compound is preferably mono-, di-, tri-functional amine and/or mono-, di-, tri-functional hydroxylamine, further preferably one or more of the following: aliphatic and/or alicyclic primary and/or secondary monoamine, diamine and triamine, most preferably one or more of the following : 1,2-ethylene diamine, 1-amino-3,3,5-trimethyl-5-aminomethylcyclohexane (isophorone diamine), diethylene triamine, diethanolamine, ethanolamine and N-(2-hydroxyethyl)-ethylene diamine.

The molar ratio of the isocyanate groups to the isocyanate-reactive groups in the system is preferably 1.0-3.0.

### Emulsifier

The anionic group of the aqueous polyurethane dispersions of the present invention are primarily derived from the emulsifier.

The emulsifier of the present invention is a compound comprising an emulsifying group or a latent emulsifying group.

The amount of the emulsifier is preferably 0.1wt%-3wt%, on a basis that the amount of the system is 100wt%.

The emulsifier preferably comprises at least one isocyanate-reactive group and at least one emulsifying or latent emulsifying group.

The isocyanate-reactive group is preferably one or more of the following: a hydroxyl group, a mercapto group, and an amino group.

The emulsifying group or latent emulsifying group is preferably one or more of the following: a sulfonic acid group and a carboxylic acid group.

The sulfonic acid group or the carboxylic acid group can be used directly in the form of their salts, such as sulfonate or carboxylate.

The sulfonic acid group or the carboxylic acid group can also be obtained by partially or completely adding a neutralizing agent to form the salt during or after the preparation of the polyurethane polymer.

The neutralizing agent for the salt formation is preferably one or more of the following: triethylamine, dimethylcyclohexylamine, ethyldiisopropylamine, ammonia, diethanolamine, triethanolamine, dimethylethanolamine, sodium hydroxide, potassium hydroxide, lithium hydroxide, calcium hydroxide, methyldiethanolamine and aminomethylpropanol, most preferably one or more of the following: triethylamine, dimethylethanolamine, dimethylcyclohexylamine and ethyldiisopropylamine.

The emulsifier is most preferably one or more of the following: a sulfonic acid compound and a carboxylic acid compound.

The sulfonic acid compound is preferably one or more of the following: a diamino compound containing a sulfonic acid group and a dihydroxy compound containing a sulfonic acid group, further preferably one or more of the following: sodium, potassium, lithium, tertiary amine salts of N-(2-aminoethyl)-2-aminoethanesulfonic acid, N-(3-aminopropyl)-2-aminoethanesulfonic acid, N-(3-aminopropyl)-3-aminopropanesulfonic acid, N-(2-aminoethyl)-3-aminopropanesulfonic acid, most preferably the salts of N-(2-aminoethyl)-2-aminoethanesulfonic acid.

The carboxylic acid compound is preferably one or more of the following: a diamino compound containing a carboxylic acid group and a dihydroxy compound containing a carboxylic acid group, further preferably one or more of the following: sodium, potassium, lithium, tertiary amine salts of dihydroxymethyl propionic acid or dihydroxymethyl butyric acid, most preferably dihydroxymethyl propionic acid.

### Solvent

The solvent is water miscible but inert to the isocyanate group.

The amount of the solvent is preferably 0.001 wt% - 20 wt%, most preferably 0.001 wt% - 3 wt%, on a basis that the amount of the system is 100wt%.

The solvent is preferably one or more of the following: acetone, 2-butanone, tetrahydrofuran, N-methylpyrrolidone, N-ethylpyrrolidone, acetonitrile, dipropylene glycol dimethyl ether, and a solvent containing an ether or ester unit, most preferably one or more of the following: acetone and 2-butanone.

The solvent may be added only at the beginning of the preparation of the polyurethane, or a part of the solvent may be added during the preparation as needed.

### Reaction diluent

The amount of the reaction diluent is preferably 0.001 wt% - 90 wt%, on a basis that the amount of the system is 100wt%.

The reactive diluent is preferably one or more of the following: acrylic acid and acrylate.

The acrylate is preferably methacrylate.

### Stabilizer

The stabilizer is favorable for reducing the hydrolysis of the aqueous polyurethane dispersion and prolonging the pot life of the aqueous polyurethane dispersion.

The pot life of the present invention refers to the period of time during which the system initially reacts to obtain an aqueous polyurethane dispersion until the performance of the resulting aqueous polyurethane dispersion is reduced to an extent insufficient to meet the requirements for use.

The stabilizer is preferably one or more of the following: a carbodiimide compound, an epoxy group compound, an oxazoline compound, and an aziridine compound.

The content of the stabilizer is preferably 0.5 wt% - 10 wt%, most preferably 0.5 wt% - 2 wt%, on a basis that the amount of the system is 100wt%.

### System

The system may further comprise an external emulsifier.

The amount of the external emulsifier is preferably 0.001 wt% - 10 wt%, on a basis that the amount of the system is 100wt%.

The external emulsifier is preferably a fatty alcohol polyether, most preferably one or more of the following: an aliphatic ethylene glycol polyether and an aliphatic propylene glycol polyether.

The system can further comprise an organic antioxidant.

The amount of the organic antioxidant is preferably 0.06 wt% - 2.0 wt%, on a basis that the amount of the polyurethane is 100wt%.

The organic antioxidant is preferably one or more of the following: a metallic carbamic acid compound, a phenolic antioxidant, an amine-type antioxidant and a heterocycle-type antioxidant, most preferably the phenolic antioxidant.

The metal is preferably one or more of the following: copper, zinc, molybdenum and antimony.

The phenolic antioxidant is preferably one or more of the following: an alkyl hindered phenol, a multiring hindered phenol and an alkylthio hindered phenol.

The amine-type antioxidant is preferably one or more of the following: a phenylene diamine-type antioxidant, a diphenylamine-type antioxidant, a phenyl-α-naphthylamine-type antioxidant and a phenothiazine-type antioxidant.

The heterocycle-type antioxidant is preferably one or more of the following: a sulfur-containing compound and a nitrogen-containing heterocyclic compound.

### The process for preparing the aqueous polyurethane dispersion

The aqueous polyurethane dispersion can be prepared in a homogeneous system via a one-step reaction or a multiple-step reaction, or in the case of the multiple-step reaction, the preparation is partially carried out in a dispersed phase. When the reaction of step ii is completed or partially completed, a dispersing, emulsifying or dissolving step is carried out. Then an addition polymerization or a modification is optionally further carried out in a dispersed phase.

The solvent can be reacted under a normal pressure or an elevated pressure.

All processes known in the art can be used to prepare the aqueous polyurethane dispersions of the present invention, for example emulsifier/shear force method, acetone method, prepolymer mixing method, melt emulsification method, ketoimine method and solid spontaneous dispersion method or a derivative method thereof, preferably melt emulsification method or acetone method, most preferably acetone method. The methods are summarized in Methoden der organischen Chemie (Houben-Weyl, Erweitenmgs-und zur4. Auflage, Volume E20, H Bartl and J. Falbe, Stuttgart, New York, Thieme 1987, p. 1671-1682).

According to the acetone method, in general, all or a part of a polyisocyanate mixture and an isocyanate-reactive group-containing mixture are firstly introduced and reacted to prepare a prepolymer; the reaction is carried out optionally in the presence of a solvent which is water-miscible but inert to the isocyanate group; the reaction is preferably carried out without a solvent but in a condition of being heated to a higher temperature, preferably 50°C-120°C.

In order to accelerate the reaction rate of step i, a catalyst that is conventionally used in the preparation of the prepolymer can be used, for example, triethylamine, 1,4-diazabicyclo-[2,2,2]-octane, tin dioctoate or dibutyltin dilaurate, preferably dibutyltin dilaurate.

The catalyst may be placed in the reactor simultaneously with the components of step i, or may be added later.

The conversion degree of the components of step i can be obtained by measuring the content of NCO in the components. For this purpose, the collected sample can be simultaneously subjected to spectroscopic measurement, such as infrared or near-infrared spectroscopy, as well as refractive index determination or chemical analysis, such as titration.

The prepolymer may be in a solid state or in a liquid state.

Any potential ionic groups present in the prepolymer are converted to an ionic form by a partial or complete reaction with a neutralizing agent.

If the dispersing water already contains a neutralizing agent, the neutralization can also be carried out simultaneously with the dispersing.

The equivalent ratio of the isocyanate-reactive group of the compound for chain growth of step ii to the free isocyanate group (NCO) of the prepolymer may be 40 mol% - 100 mol%, preferably 50 mol% - 100 mol%.

The components of step ii may be optionally used alone or in combination in the form of water dilution or solvent dilution, and the addition order may be any order.

Step iii can be carried out under a strong shearing such as vigorous agitation.

The solvent present in the aqueous polyurethane urea dispersion can be removed by distillation. The solvent can be removed during step ii or step iii.

The amount of the organic solvent being residual in the aqueous polyurethane dispersion is preferably less than 1.0 wt%, on a basis that the amount of the aqueous polyurethane dispersion is 100wt%.

### Composition

The composition comprising the aqueous polyurethane dispersion is preferably a coating, an adhesive, a sealant or a printing ink.

The dispersion can be used alone or in combination with the additives known in the technology of coatings, adhesives, sealants or printing inks.

The additive may be one or more of the following: a co-adhesive, a lubricant, a filler, an anti-settling agent, an antifoaming agent, a wetting agent, a flow control agent, an antistatic agent, a film forming aid, a plasticizer. a neutralizer, a catalyst, a thickening agent, a pigment, a dye, a tackifier and a matting agent.

The selection and use metering of the additive is in principle known to those of ordinary skill in the art and readily determined.

The aqueous polyurethane dispersions of the present invention may also be mixed and used together with other aqueous or solvent-containing oligomers or polymers, such as aqueous or solvent-containing polyesters, polyurethanes, polyurethane-polyacrylates, polyacrylates, polyethers, polyester-polyacrylates, alkyd resins, addition polymers, polyamide/imides or polyepoxides. The compatibility of such mixtures must be tested in each case using a simple preliminary test.

The aqueous polyurethane dispersion of the present invention may also be mixed and used together with other compounds containing functional groups such as a carboxyl group, a hydroxyl group and/or a blocked isocyanate group.

The coating, the adhesive, the sealant or the printing ink of the present invention are obtained by the processing according to the method known to those skilled in the art.

### Adhesive

The thermal activation temperature of the adhesive is preferably 35°C - 70°C.

The adhesive preferably further comprises a crosslinking agent having a carboxyl group-reactive group.

The crosslinking agent is preferably a compound containing a polycarbodiimide group.

The content of the crosslinking agent is preferably 0.1 wt% - 10 wt%, on a basis that the amount of the adhesive is 100wt%.

### Adhesion article

The substrate is preferably one or more of the following: rubber, plastic, paper, cardboard, wood, textile, metal, alloy, fabric, fiber, artificial leather, leather, inorganic material, human or animal hair, and human or animal skin; most preferably one or more of the following: rubber and plastic.

The adhesion article is preferably a shoe sole or a shoe shaft.

The adhesion article is preferably film or wood.

### Method of manufacturing the adhesion article

Said method preferably further comprises step D between step B and step C: irradiating the surface of the substrate treated in step B with actinic radiation.

The method of manufacturing an adhesion article preferably comprises the steps of:
A. applying an adhesive provided in accordance with the present invention to at least one surface of a substrate;
B. heating and drying the surface of the substrate to which the adhesive is applied;
D. irradiating the surface of the substrate treated in step B with actinic radiation; and
C. contacting the surface of the substrate treated in step D with the substrate itself or the surface of an additional substrate to obtain the adhesion article.

The substrate is preferably one or more of the following: rubber, plastic, paper, cardboard, wood, textile, metal, alloy, fabric, fiber, artificial leather, leather, inorganic material, human or animal hair, and human or animal skin; most preferably one or more of the following: rubber and plastic.

The application can be an application of the adhesive to the entire surface of the substrate or to only one or more parts of the surface of the substrate.

The application may be brush coating, impregnating, spraying, roller coating, scrape coating, flow coating, casting, printing or transfer printing, preferably brush coating, impregnating or spraying.

Said heating and drying the surface of the substrate to which the adhesive is applied may mean heating and drying only the surface of the substrate, and may also mean heating and drying a part or all of the substrate including the surface of the substrate to which the adhesive is applied.

The heating and drying can remove volatile components. The volatile component can be water.

The heating and drying is preferably one or more of the following: infrared thermal radiation, near-infrared thermal radiation, microwave, and using a convection oven or a spray dryer in a condition of an elevated temperature.

The higher the temperature of the heating is, the better it is, but it should not be higher than the temperature limit at which the substrate deforms in an uncontrolled manner or encounters other damages.

The irradiating with actinic radiation is preferably carried out when the surface temperature of the substrate treated in step B is not lower than 35°C, most preferably immediately after the treatment in step B.

Irradiating the surface of the substrate treated in step B with actinic radiation may mean irradiating only the surface of the substrate, and may also mean irradiating a part or all of the substrate including the surface of the substrate.

The actinic radiation crystallizes and cures the adhesive.

The actinic radiation is preferably UV radiation, solar radiation, radiation with an inert gas or an oxygen-depleted gas in the absence of oxygen, or radiation with a radiation-transparent medium covering the portion to be irradiated, most preferably UV radiation or solar radiation.

The inert gas is preferably nitrogen or carbon dioxide. The radiation-transparent medium is preferably a synthetic film, glass or a liquid such as water.

The UV radiation or the solar radiation may be carried out with a medium or high pressure mercury vapor lamp, which is optionally doped with other elements such as gallium or iron to modify the mercury vapor, or may be carried out with a laser, a pulsed lamp, a halide lamp or an excimer radiator.

The actinic radiation is most preferably the UV radiation. Most preferably, a fixedly mounted mercury radiation is used for the UV radiation.

When the substrate has a three-dimensional surface in a complicated shape, it is preferred to use a plurality of radiation devices for radiation, and the radiation devices are reasonably arranged so that the radiation is uniformly received by the surface.

The wavelength of the actinic radiation is preferably 200nm-750nm.

The dose of the actinic radiation is preferably not less than 80 mJ/cm², further preferably 80 mJ/cm²-5,000 mJ/cm², more preferably 200 mJ/cm²-2,000 mJ/cm², most preferably 1,250 mJ/cm²-1,950 mJ / cm².

Within the above range, the higher the radiation dose of the actinic radiation is, the better it is, but it should not be higher than the radiation dose limit at which the substrate deforms in an uncontrolled manner or encounters other damages.

The contacting is preferably carried out before the surface temperature of the substrate decreases below the bondable temperature of the adhesive, and further preferably before the surface temperature of the substrate is not lower than 60° C.

The surface of the substrate treated in step D is preferably contacted with the substrate itself or an additional substrate within one hour, further preferably within 30 minutes, more preferably within 10 minutes, and most preferably within 5 minutes to obtain the adhesion article.

The additional substrate can be any substrate that requires to be bonded.

The additional substrate may or may not be identical to said substrate.

The additional substrate is preferably subjected to coating, heating and actinic radiation treatment as same as said substrate.

Preferably, the additional substrate is not treated with primer, high energy radiation or ozone prior to being contacted with the surface of the substrate.

The high energy radiation can be ionizing radiation, in particular plasma.

The surface of the substrate that has been treated in step B or treated in step D, after being contacted with the substrate itself or the additional substrate, can also be subjected to a further heat treatment.

The surface of the substrate that has been treated in step B or treated in step D, after being contacted with the substrate itself or the additional substrate, can also be subjected to a further cooling treatment, so that the temperature of the bonded product is reduced to room temperature.

The method of introducing the heat is preferably one or more of the following: using a convection oven or a spray dryer in a condition of an elevated temperature, infrared thermal radiation, near infrared thermal radiation, microwave and transferring the heat with an object being contacted with the substrate coated with the adhesive of the present invention.

Before the surface of the substrate that has been treated in step B or treated in step D is contacted with the substrate itself or the additional substrate, it is preferably unnecessary to introduce the heat to the surface of the substrate.

### Examples

Unless otherwise defined, all technical and scientific terms used herein have the same meanings as commonly understood by those skilled in the art. When the definition of a term in this specification conflicts with the meanings generally understood by those skilled in the art to which the invention pertains, the definitions described herein will prevail.

Unless otherwise stated, all numbers expressing the ingredient amount, the reaction condition and the like as used in the specification and claims are understood to be modified by the term "about". Accordingly, unless indicated to the contrary, the numerical parameters set forth herein are approximations that can vary depending on the desired properties one seeks to obtain.

As used herein, "and/or" refers to one or all of the elements mentioned.

As used herein, "including" and "comprising/containing" are intended to cover the circumstance in which there are only the mentioned elements, and the circumstance in which there are not only the mentioned elements but also other non-mentioned elements.

All percentages in the present invention are by weight unless otherwise indicated.

The analysis and measurement according to the present invention are carried out at 23±2°C unless otherwise stated.

The solid content of the aqueous polyurethane dispersion is measured according to DIN-EN ISO 3251 using a HS153 moisture determination meter from Mettler Toledo company.

The isocyanate group (NCO) content is determined by volume according to DIN-EN ISO 11909 and the measured data includes free and potentially free NCO contents.

The viscosity of the aqueous polyurethane dispersion is measured according to DIN 53019 at 23°C by using a Brookfield's DV-II + Pro. rotational viscometer.

The pH of the aqueous polyurethane dispersion is measured at 23°C using a PB-10pH meter from Sartorius AG, Germany.

The acid value is determined by acid-base titration.

The neutralization degree is calculated based on the mole numbers of the carboxyl group and the neutralizing agent.

For measuring the number-average molecular weight and the weight-average molecular weight of the polyurethane, a gel permeation chromatography is used. The aqueous polyurethane dispersion is coated on a polytetrafluoroethylene plate, and the coated plate is naturally dried at room temperature to obtain a dry film. An appropriate amount of dry film is weighed and dissolved in tetrahydrofuran at a concentration of 8 mg/mL. A test is performed with Agilent 1260 (column temperature = 35°C, injection volume = 60 µL, flow rate = 0.7 mL/min). The test result is obtained based on the polystyrene standard as control, and the fractions having molecular weights of 100 or higher are selected for the calculation.

### Raw materials and reagents

Polyester I: 1,4-butanediol polyadipate diol, having an OH value of 50, a melting temperature of 49° C, a fusion enthalpy of 91.0 J/g, and a number average molecular weight of 2323g/mol, commerically available from Covestro AG, Germany.
Polyester II: a polyester diol composed of 1,6-hexanediol, neopentyl glycol and adipic acid, having an OH value of 66 and a number-average molecular weight of 1691g/mol, commercially available from Covestro AG, Germany.

Desmodur® H: 1,6-hexamethylene diisocyanate, commercially available from Covestro AG.
Desmodur® I: Isophorone diisocyanate, commercially available from Covestro AG.
DMPA: 2,2-dihydroxymethyl propionic acid, available from Aldrich Chemical Company.
L-lysine: 50% L-lysine aqueous solution, commercially available from FEIHE CHEMICAL CO., LTD.
AAS: diamino sodium sulfonate NH₂-CH₂CH₂-NH-CH₂CH₂-SO₃Na in water at a concentration of 45%, commercially available from Covestro AG.
Rubber treating agent: B powder (trichloroisocyanuric acid) dissolved in ethyl acetate, at a concentration of 2 wt%.

### Aqueous polyurethane dispersion 1

450g of polyester I and 42.5g of polyester II were dehydrated for 1 hour at 110°C under 100 mbar and then 2.25 g of 1,4-butanediol was added; and the mixture was cooled while being stirred. 37.84g of Desmodur® H and 25g of Desmodur® I were added at 60°C, and the resulting mixture was stirred at 80-90°C until it reached the isocyanate group content of 1.3%. Then, the mixture was dissolved in 840g of acetone, and cooled to 50°C to obtain a reaction solution. A solution of 5.6g of AAS, 3.2g of diethanolamine and 1.8g of 6-aminocaproic acid in 56g of water was added to the reaction mixture solution, the mixture was vigorously agitated for 30 minutes, 510g of water was added to disperse the mixture, then acetone was removed by distillation to obtain the aqueous polyurethane dispersion 1.

### Aqueous polyurethane dispersion 2

450g of polyester I and 42.5g of polyester II were dehydrated for 1 hour at 110°C under 100 mbar and then 1.58g of 1,4-butanediol and 1.01g of DMPA were added; and the mixture was cooled while being stirred. 37.84g of Desmodur® H and 25g of Desmodur® I were added at 60°C, and the resulting mixture was stirred at 80-90°C until it reached the isocyanate group content of 1.3%. Then, the mixture was dissolved in 840g of acetone, and cooled to 50°C to obtain a reaction solution. A solution of 5.6g of AAS, 1.7g of diethanolamine and 1.2g of hydroxyethyl ethylene diamine in 56g of water was added to the reaction mixture solution, the mixture was vigorously agitated for 30 minutes, 510g of water was added to disperse the mixture, then acetone was removed by distillation to obtain the aqueous polyurethane dispersion 2.

### Aqueous polyurethane dispersion 3

450g of polyester I and 42.5g of polyester II were dehydrated for 1 hour at 110°C under 100 mbar and then 2.25 g of 1,4-butanediol was added; and the mixture was cooled while being stirred. 37.84g of Desmodur® H and 25g of Desmodur® I were added at 60°C, and the resulting mixture was stirred at 80-90°C until it reached the isocyanate group content of 1.3%. Then, the mixture was dissolved in 840g of acetone, and cooled to 50°C to obtain a reaction solution. A solution of 5.6g of AAS, 2.2g of 6-aminocaproic acid and 1.2g of hydroxyethyl ethylene diamine in 56g of water was added to the reaction mixture solution, the mixture was vigorously agitated for 30 minutes, 510g of water was added to disperse the mixture, then acetone was removed by distillation to obtain the aqueous polyurethane dispersion 3.

### Aqueous polyurethane dispersion 4

450g of polyester I and 42.5g of polyester II were dehydrated for 1 hour at 110°C under 100 mbar and then 3.4g of DMPA was added; and the mixture was cooled while being stirred. 37.84g of Desmodur® H and 25g of Desmodur® I were added at 60°C, and the resulting mixture was stirred at 80-90°C until it reached the isocyanate group content of 1.3%. Then, the mixture was dissolved in 840g of acetone, and cooled to 50°C to obtain a reaction solution. A solution of 5.6g of AAS, 1.4g of diethanolamine and 1.2g of hydroxyethyl ethylene diamine in 56g of water was added to the reaction mixture solution, the mixture was vigorously agitated for 30 minutes, 510g of water was added to disperse the mixture, then acetone was removed by distillation to obtain the aqueous polyurethane dispersion 4.

### Aqueous polyurethane dispersion 5

360g of polyester I and 34g of polyester II were dehydrated for 1 hour at 110°C under 100 mbar and then 1.8g of DMPA was added; and the mixture was cooled while being stirred. 30.27g of Desmodur® H and 20g of Desmodur® I were added at 60°C, and the resulting mixture was stirred at 80-90°C until it reached the isocyanate group content of 1.4%. Then, the mixture was dissolved in 670g of acetone, and cooled to 50°C to obtain a reaction solution. A solution of 4.5g of AAS, 1.9g of diethanolamine and 0.6g of hydroxyethyl ethylene diamine in 40g of water was added to the reaction mixture solution, the mixture was vigorously agitated for 30 minutes, 410g of water was added to disperse the mixture, then acetone was removed by distillation to obtain the aqueous polyurethane dispersion 5.

### Aqueous polyurethane dispersion 6

315g of polyester I was dehydrated for 1 hour at 110°C under 100 mbar and then 6.7g of DMPA was added; and the mixture was cooled while being stirred. 30.77g of Desmodur® H and 20.33g of Desmodur® I were added at 60°C, and the resulting mixture was stirred at 80-90°C until it reached the isocyanate group content of 1.9%. Then, the mixture was dissolved in 260g of acetone, and cooled to 50°C to obtain a reaction solution. A solution of 8.3g of 6-aminocaproic acid and 2.0g of hydroxyethyl ethylene diamine in 40g of water was added to the reaction mixture solution, the mixture was vigorously agitated for 30 minutes, 5.1g of triethylamine was added and the stirring was continued for 10 minutes, 350g of water was added to disperse the mixture, then acetone was removed by distillation to obtain the aqueous polyurethane dispersion 6.

### Aqueous polyurethane dispersion 7

450g of polyester I and 42.5g of polyester II were dehydrated for 1 hour at 110°C under 100 mbar and then 3.4g of DMPA was added; and the mixture was cooled while being stirred. 37.84g of Desmodur® H and 25g of Desmodur® I were added at 60°C, and the resulting mixture was stirred at 80-90°C until it reached the isocyanate group content of 1.3%. Then, the mixture was dissolved in 840g of acetone, and cooled to 50°C to obtain a reaction solution. A solution of 5.6g of AAS and 2.2g of hydroxyethyl ethylene diamine in 56g of water was added to the reaction mixture solution, the mixture was vigorously agitated for 30 minutes, 510g of water was added to disperse the mixture, then acetone was removed by distillation to obtain the aqueous polyurethane dispersion 7.

### Aqueous polyurethane dispersion 8

394g of polyester I was dehydrated for 1 hour at 110°C under 100 mbar and then 13.4g of DMPA was added; and the mixture was cooled while being stirred. 41.5g of Desmodur® H and 27.6g of Desmodur® I were added at 60°C, and the resulting mixture was stirred at 80-90°C until it reached the isocyanate group content of 1.7%. Then, the mixture was dissolved in 720g of acetone, and cooled to 50°C to obtain a reaction solution. A solution of 1.8g of L-lysine, 8.3g of 6-aminocaproic acid and 2.3g of hydroxyethyl ethylene diamine in 50g of water was added to the reaction mixture solution, the mixture was vigorously agitated for 30 minutes, 10.1g of triethylamine was added and the stirring was continued for 10 minutes, 510g of water was added to disperse the mixture, then acetone was removed by distillation to obtain the aqueous polyurethane dispersion 8.

### Aqueous polyurethane dispersion 9

450g of polyester I and 42.5g of polyester II were dehydrated for 1 hour at 110°C under 100 mbar and then 2.25 g of 1,4-butanediol was added; and the mixture was cooled while being stirred. 37.84g of Desmodur® H and 25g of Desmodur® I were added at 60°C, and the resulting mixture was stirred at 80-90°C until it reached the isocyanate group content of 1.3%. Then, the mixture was dissolved in 840g of acetone, and cooled to 50°C to obtain a reaction solution. A solution of 5.6g of AAS, 0.8g of diethanolamine and 1.7g of hydroxyethyl ethylene diamine in 56g of water was added to the reaction mixture solution, the mixture was vigorously agitated for 30 minutes, 510g of water was added to disperse the mixture, then acetone was removed by distillation to obtain the aqueous polyurethane dispersion 9.

### Aqueous polyurethane dispersion 10

382.5g of polyester II was dehydrated for 1 hour at 110°C under 100 mbar and then 3.4g of DMPA was added; and the mixture was cooled while being stirred. 37.84g of Desmodur® H and 25g of Desmodur® I were added at 60°C, and the resulting mixture was stirred at 80-90°C until it reached the isocyanate group content of 1.6%. Then, the mixture was dissolved in 670g of acetone, and cooled to 50°C to obtain a reaction solution. A solution of 4.7g of AAS, 0.6g of diethanolamine and 2.1g of hydroxyethyl ethylene diamine in 56g of water was added to the reaction mixture solution, the mixture was vigorously agitated for 30 minutes, 400g of water was added to disperse the mixture, then acetone was removed by distillation to obtain the aqueous polyurethane dispersion 10.

### Aqueous polyurethane dispersion 11

450g of polyester I and 42.5g of polyester II were dehydrated for 1 hour at 110°C under 100 mbar and then 2.25 g of 1,4-butanediol was added; and the mixture was cooled while being stirred. 75g of Desmodur® I was added at 60°C, and the resulting substance was stirred at 80-90°C until it reached the isocyanate group content of 1.3%. Then, the mixture was dissolved in 840g of acetone, and cooled to 50°C to obtain a reaction solution. A solution of 5.6g of AAS, 2.7g of 6-aminocaproic acid and 0.9g of hydroxyethyl ethylene diamine in 56g of water was added to the reaction mixture solution, the mixture was vigorously agitated for 30 minutes, 510g of water was added to disperse the mixture, then acetone was removed by distillation, and the emulsion was broken during the distillation process.

### Initial bonding force test

The black rubber (10 cm ^{∗} 2 cm) was mechanically ground and then treated with a rubber treating agent. After the rubber treating agent was dried, the aqueous polyurethane dispersions according to examples of the present invention and the comparative examples were applied to the pretreated black rubber using a brush. The application was started from one end of the black rubber, the coating area was 3.5 cm ^{∗} 2 cm. The drying was performed in an oven at 60°C, and the activation was carried out for 3 minutes. The side of the black rubber, on which the aqueous polyurethane dispersions of the inventive examples and the comparative examples were applied, was face-to-face bonded and pressed with the YC-500 hydraulic press available from Master Tech company for 5 seconds at 4.5kg pressure. The pressure was removed, and the sample was placed at room temperature (temperature 23±2°C, humidity 50±5%) for 5 minutes. The opening length was measured with a ruler. Each of the dispersions was tested twice using the above method, and the data were listed in Table 1. The greater the opening length was, the worse the initial bonding force of the aqueous polyurethane dispersion was.

Table 1 shows the parameters and the result of performance test for the aqueous polyurethane dispersions of the examples of the present invention and the comparative examples.

**Table 1: The parameters and the test result for the dispersions of the examples and the comparative examples**

| | Parameters of aqueous polyurethane dispersion | | | | | | | Performance Test |
|---|---|---|---|---|---|---|---|---|
| | Aqueous polyurethane dispersion | The acid valueof the aqueous polyurethane dispersion (mgKOH/g) | polyurethane fusion enthalpy (J/g) | polyurethane weight-average molecular weight | polyurethane number-average molecular weight (g/mol) | carboxyl group content of polyurethane (wt%) | neutralization degree of carboxyl groups of the carboxyl group-containing isocyanate-reactive compound (%) | Opening length Test 1/Test 2 (mm) |
| Comparative Example 1 | 1 | 1.058 | 39.59 | 20755 | 4423 | 0.11 | 0 | 15/17 |
| Comparative Example 2 | 2 | 0.215 | 36.39 | 72771 | 4254 | 0.06 | 0 | de-bonding/de-bonding |
| Comparative Example 3 | 7 | 1.94 | 40.32 | 187380 | 4183 | 0.2 | 0 | de-bonding/de-bonding |
| Comparative Example 4 | 8 | 8.841 | 47.41 | 45986 | 4621 | 1.62 | 57 | de-bonding/de-bonding |
| Comparative Example 5 | 9 | 0.32 | 38.37 | 110530 | 5428 | 0 | free of carboxyl and no neutralization degree | de-bonding/de-bonding |
| Comparative Example 6 | 10 | 2.117 | Amorphous | 63115 | 5554 | 0.25 | 0 | de-bonding/de-bonding |
| Comparative Example 7 | Aqueous polyurethane dispersion 11, the emulsion was broken in the distillation procedure, and no dispersion was formed. | | | | | | | |
| Example 1 | 3 | 1.224 | 39.7 | 55109 | 5565 | 0.13 | 0 | 6/7 |
| Example 2 | 4 | 1.795 | 39.09 | 47292 | 4806 | 0.20 | 0 | 8/8 |
| Example 3 | 5 | 0.712 | 52.33 | 64959 | 9761 | 0.13 | 0 | 11/12 |
| Example 4 | 6 | 7.94 | 72.37 | 60498 | 9516 | 1.33 | 45 | 8/10 |

It can be seen from Table 1 that the opening lengths of the black rubbers obtained by bonding with the aqueous polyurethane dispersions of Examples 1-4 were significantly shorter than those of Comparative Examples 1-6, indicating the initial bonding forces of the aqueous polyurethane dispersions of the present invention were significantly better than those of the comparative examples. In comparative examples 1-6, when the acid values of the aqueous polyurethane dispersion were less than 0.5 or greater than 8.5, the weight-average molecular weights were less than 31,000 or higher than 95,000, or the polyurethane was amorphous, that is, the fusion enthalpy was 0, the black rubbers obtained by bonding therewith had large opening lengths, and even debonded, indicating the initial bonding forces of the aqueous polyurethane dispersions of the comparative examples were bad. It can be known from Comparative Example 7 that when the polyisocyanate mixture of the system for preparing the aqueous polyurethane dispersion did not contain hexamethylene diisocyanate, the emulsion was broken during the course of preparing the aqueous polyurethane dispersion, and therefore no dispersion could be formed.

It is apparent to those skilled in the art that the present invention is not limited to the specific details described above, and the present invention may be embodied in other specific forms without departing from the spirit and scope of the invention. Therefore, the described Examples are to be considered in all respects as illustrative and not restrictive, and the scope of the invention is thus indicated by the claims rather than the foregoing description; and therefore, any change should be construed as a part of the invention, only if it belongs to the meaning and range of the claim's equivalent.

## Claims

1. An aqueous polyurethane dispersion, comprising a polyurethane having an anionic group dispersed therein, the polyurethane has a fusion enthalpy of 3J/g - 100J/g at 20°C-100°C of the first temperature rising curve measured with the DSC according to DIN 65467, a weight-average molecular weight of 31,000 - 95,000, and the aqueous polyurethane dispersion has an acid value of 0.5 mg KOH/g - 8.5 mg KOH/g.

2. The aqueous polyurethane dispersion according to claim 1, which is **characterized in that** the anionic group is located on the side chain of the polyurethane, and the anionic group is one or more of the following: a sulfonate group and a carboxylate group.

3. The aqueous polyurethane dispersion according to claim 1 or 2, which is **characterized in that** the polyurethane has a fusion enthalpy of 25J/g - 100J/g at 20°C-100°C of the first temperature rising curve measured with the DSC according to DIN 65467.

4. The aqueous polyurethane dispersion according to any of claims 1-3, which is **characterized in that** the carboxyl group content of the polyurethane is 0.1 wt%-1.5 wt%, on a basis that the amount of the polyurethane is 100 wt%.

5. The aqueous polyurethane dispersion according to any of claims 1-4, which is **characterized in that** the polyurethane is obtained by reacting a system comprising the following components:
a. a polyisocyanate mixture containing hexamethylene diisocyanate;
b. an isocyanate-reactive group-containing mixture, comprising a polymer polyol having a number-average molecular weight of 400 g/mol - 8,000 g/mol and a carboxyl group-containing isocyanate-reactive compound;
c. an emulsifier;
d. an optional solvent;
e. an optional reactive diluent; and
f. an optional stabilizer;
the polymer polyol has a fusion enthalpy of 3J/g-100J/g at 20°C-100°C of the first temperature rising curve measured with the DSC according to DIN 65467, the amount of the carboxyl group-containing isocyanate-reactive compound is 0.1wt%-1.5wt% on a basis that the amount of the polyurethane is 100wt%, and the neutralization degree of the carboxyl groups of the carboxyl group-containing isocyanate-reactive compound is 0-50%.

6. The aqueous polyurethane dispersion according to claim 5, which is **characterized in that** the fusion enthalpy of the polymer polyol at 20°C-100°C of the first temperature rising curve measured with the DSC according to DIN 65467 is 25 J/g-100 J/g.

7. The aqueous polyurethane dispersion according to claim 5 or 6, which is **characterized in that** the neutralization degree of the carboxyl group of the carboxyl group-containing isocyanate-reactive compound is 0.

8. The aqueous polyurethane dispersion according to any of claims 1-7, which is **characterized in that** the molar ratio of the isocyanate groups to the isocyanate-reactive groups in the system is preferably 1.0-3.0.

9. A process for preparing an aqueous polyurethane dispersion according to any of claims 1-8, comprising the steps of:
i. reacting some or all of a polyisocyanate mixture and an isocyanate-reactive group-containing mixture to obtain a prepolymer, the reaction is carried out in the presence of an optional solvent, or an optional solvent is added after the reaction to dissolve the prepolymer;
ii. reacting the prepolymer, an emulsifier, an optional reactive diluent, an optional stabilizer, the polyisocyanate mixture that is not added in the step i, and the isocyanate-reactive group-containing mixture that is not added in the step i to obtain the polyurethane; and
iii. introducing water and an optional emulsifier before, during or after step ii to obtain the aqueous polyurethane dispersion;
the aqueous polyurethane dispersion comprises a polyurethane having an anionic group dispersed therein, said polyurethane has a fusion enthalpy of 3J/g-100J/g at 20°C-100°C of the first temperature rising curve measured with the DSC according to DIN 65467, and a weight-average molecular weight of 31,000-95,000, the aqueous polyurethane dispersion has an acid value of 0.5 mg KOH/g-8.5 mg KOH/g.

10. A composition comprising an aqueous polyurethane dispersion according to any of claims 1-8.

11. The composition according to claim 10, which is **characterized in that** the composition is a coating, an adhesive, a sealant or a printing ink.

12. An adhesive comprising an aqueous polyurethane dispersion according to any of claims 1-8.

13. The adhesive according to claim 12, which is **characterized in that** the thermal activation temperature of the adhesive is 35°C - 70°C.

14. The adhesive according to claim 12 or 13, which is **characterized by** further comprising a crosslinking agent having a carboxyl group-reactive group.

15. An adhesion article having a substrate bonded with an adhesive according to any of claims 12-14.

16. The adhesion article according to claim 15, which is **characterized in that** the substrate is one or more of the following: rubber, plastic, paper, cardboard, wood, textile, metal, alloy, fabric, fiber, artificial leather, leather, inorganic material, human or animal hair, and human or animal skin; most preferably one or more of the following: rubber and plastic.

17. The adhesion article according to claim 15 or 16, which is **characterized in** the adhesion article is a shoe sole or a shoe shaft.

18. The adhesion article according to any of claims 15-17, which is **characterized in** the adhesion article is film or wood.

19. A method of manufacturing an adhesion article, comprising the steps of:
A. applying an adhesive according to any of claims 12-14 to at least one surface of a substrate;
B. heating and drying the surface of the substrate to which the adhesive is applied; and
C. contacting the surface of the substrate treated in step B with the substrate itself or the surface of an additional substrate to obtain the adhesion article.

20. The method according to claim 19, which is **characterized in** said method further comprises step D between step B and step C: irradiating the surface of the substrate treated by step B with actinic radiation.

21. Use of the aqueous polyurethane dispersion according to any of claims 1-8 in the manufacture of an adhesion article.
